# EUROPÄISCHE PATENTSCHRIFT

(11) **EP 2 908 963 B1**
(45) Veröffentlichungstag und Bekanntmachung des Hinweises auf die Patenterteilung: **24.08.2016**
(21) Anmeldenummer: 13801990.6
(22) Anmeldetag: 22.10.2013
(51) Int. Cl.: B21D 43/05, B23K 37/047

(54) **UMFORMANLAGE SOWIE VERFAHREN ZUM TRANSPORTIEREN VON WERKSTÜCKEN IN EINER UMFORMANLAGE**
FORMING SYSTEM AND METHOD FOR TRANSPORTING WORK PIECES IN A FORMING SYSTEM
INSTALLATION DE FAÇONNAGE ET PROCÉDÉ DE TRANSPORT DE PIÈCES DANS UNE INSTALLATION DE FAÇONNAGE

(30) Priorität: 22.10.2012 DE 102012110065
(43) Veröffentlichungstag der Anmeldung: 26.08.2015
(73) Patentinhaber: Schuler Automation GmbH & Co. KG, 91093 Hessdorf (DE)
(72) Erfinder: CISAR, Rolf, 91238 Engelthal (DE)
(74) Vertreter: Louis Pöhlau Lohrentz
(86) Internationale Anmeldenummer: PCT/EP2013/072103
(87) Internationale Veröffentlichungsnummer: WO 2014/064123

(56) Entgegenhaltungen:
- EP-A1- 0 600 254
- EP-A1- 0 754 510
- DE-B4-112006 000 904

## Beschreibung

Die Erfindung betrifft eine Umformanlage nach dem Oberbegriff des Anspruchs 1 bzw. des Anspruchs sowie ein Verfahren zum Transportieren von Werkstücken in einer Pressenanlage nach dem Oberbegriff des Anspruches 8.

Die gattungsgemässe EP 0 600 254 A1 zeigt eine Transportvorrichtung für eine Presse. Dabei ist an einer Umformstation ein Crossbarschlitten vorgesehen, der mittels Zahnriemen angetrieben ist.

In der DE 11 2006 000 904 B4 ist eine Werkstücktransfervorrichtung einer Pressmaschine beschrieben, die ein Paar von bewegbaren Trägern aufweist mit einem an einer Trägerantriebsvorrichtung befestigten Träger und einem auf dem befestigten Träger angeordneten bewegbaren Träger. Die Pressmaschine weist nebeneinander angeordnete Umformstationen auf. Die Werkstücktransfervorrichtung übergibt Werkstücke von einer Umformstation zu einer benachbarten Umformstation. Nachteilig ist, dass die Umformstationen gleiche Längenabmessungen und gleichen Abstand in Transportrichtung aufweisen müssen.

Aus der EP 0 754 510 A1 ist eine Transportvorrichtung mit einer Transfereinheit gezeigt, die Werkstücke entlang einer Transportrichtung nacheinander durch mehrere Bearbeitungsstationen transportiert.

Aufgabe der vorliegenden Erfindung ist es, eine Umformanlage anzugeben, die diese Nachteile nicht aufweist, sowie ein weiter verbessertes Verfahren zum Transportieren von Werkstücken in einer Pressenanlage von jeweils einer Umformstation zu einer anderen Umformstation anzugeben.

Erfindungsgemäß wird diese Aufgabe in einem ersten Aspekt mit dem Gegenstand des Anspruchs 1 und in einem zweiten Aspekt mit dem Gegenstand des Anspruchs 2, sowie durch ein Verfahren gemäß den Merkmalen des Anspruchs 8 gelöst.

Es wird eine Umformanlage für vorzugsweise metallische (oder auch aus Karbonfasern bestehende) Werkstücke vorgeschlagen, wobei die Umformanlage vorzugsweise als Pressenanlage ausgebildet ist, mit mehreren Umformstationen und mit einer Transportvorrichtung zum Transportieren der Werkstücke, wobei die Transportvorrichtung zumindest eine Schiene aufweist, die zumindest zwei gegenüber der Schienen bewegliche, insbesondere verfahrbare Schlitten trägt, wobei die Schlitten als Teil einer Greifeinrichtung ausgebildet sind und/oder jeweils mindestens einen Greifer tragen, und wobei die Schlitten und/oder zumindest eine Schiene zumindest in eine Transportrichtung (insbesondere horizontal) bewegbar sind, um von der Greifeinrichtung bzw. den Greifern ergriffene Werkstücke von einer Umformstation zu einer anderen zu transportieren, wobei gemäß dem ersten Aspekt vorgesehen ist, dass zumindest zwei Schlitten an derselben Schiene beim Transportieren de Werkstücke von einer Umformstation zu einer anderen Umformstation mit variierendem Abstand zueinander bewegt werden, indem sie in die entgegengesetzte Richtung verfahren werden.

Gemäß dem zweiten Aspekt ist vorgesehen,
a) dass ein erster Schlitten von zwei Schlitten an derselben Schiene ein erstes Werkstück von einer Umformstation zu einer anderen Umformstation in eine erste Richtung bewegt, und
b) dass während a) oder nach Abschluss von a) ein zweiter Schlitten der zwei Schlitten an derselben Schiene ein zweites Werkstück von einer Umformstation zu der anderen Umformstation in die zu der ersten Richtung entgegengesetzten Richtung bewegt.

Bei dem zweiten Aspekt ist bevorzugt vorgesehen, dass während a) der zweite Schlitten nicht bewegt wird. Ferner kann vorgesehen sein, dass während b) der erste Schlitten in die zur ersten Richtung entgegengesetzte Richtung zurückbewegt wird.

Hintergrund dieser zusätzlichen Maßnahmen ist, dass der erste und der zweite Schlitten nicht miteinander kollidieren sollen, insbesondere, wenn die andere Umformstation von beiden Schlitten zugleich entsprechende Werkstücke erhält, etwa wenn diese in besagter Umformstation miteinander verbunden werden sollen.

Die zumindest eine Schiene kann insbesondere zusätzlich auf Werkstücke zu in einer Richtung senkrecht zur Transportrichtung bewegbar sein. Alternativ kann das Ergreifen der Werkstücke durch eine aktive Greifeinrichtung bzw. Greifer erfolgen, die bzw. der eine Bewegung gegenüber dem Schlitten selbst ermöglicht/ermöglichen.

Bevorzugt weist bei der Umformanlage gemäß der Erfindung die Transportvorrichtung zumindest zwei Schienen auf, die jeweils zumindest zwei gegenüber den Schienen bewegliche, insbesondere verfahrbare Schlitten tragen, wobei die Schlitten der beiden Schienen einander paarweise entsprechen und als Teil einer Greifeinrichtung ausgebildet sind und/oder jeweils mindestens einen Greifer tragen, und wobei die Schienen zum Ergreifen eines oder mehrerer Werkstücke in eine Schließrichtung aufeinander zu bewegbar sind und besonders bevorzugt in eine vertikale Anhebrichtung anhebbar sind, um die ergriffenen Werkstücke abzuheben, wobei die Schienen und/oder die Schlitten in eine Transportrichtung senkrecht zur Schließrichtung horizontal bewegbar sind, um die Werkstücke von einer Umformstation zu einer anderen Umformstation zu transportieren, und wobei die ggf. angehobenen Schienen dann in einer Richtung entgegen der vertikalen Anhebrichtung absenkbar sind und (ggf. anschließend) voneinander weg bewegbar sind, um die Werkstücke abzusetzen.

Die Fähigkeit der Schienen zur vertikalen Bewegung ist nicht zwingend. Es kann sich um eine rein in einer zweidimensionalen Ebene bewegende Transportvorrichtung handeln. Bevorzugt ist allerdings das Anheben in die vertikale Anhebrichtung und das spätere dazu zugehörige Absenken der Schienen.

Der Vorteil der Umformanlage nach Anspruch 1 oder 2 besteht darin, dass eine erhöhte Flexibilität gegeben ist. Es ist nicht mehr notwendig, dass die Umformstationen den gleichen Stufenabstand (d.h. die gleichen Längenabmessungen und gleichen Abstände in Transportrichtung zueinander) bereitstellen müssen. Dadurch ist insbesondere eine Umformanlage mit mehreren Umformstationen nachrüstbar mit einer geeigneten Transportvorrichtung.

Durch die Erfindung wird eine ganz neuartige Transportweise ermöglicht, bei der durch ein- und dieselbe Transportvorrichtung mit einem Schienenpaar Werkstücke in unterschiedliche Transportrichtungen transportiert werden, so dass in ein- und derselben Umformanlage unabhängige Zweige in der Bearbeitungslinie vorgesehen werden können.

Bevorzugt werden die erste und die zweite Werkstücke aufeinander zu bewegt.

In einer vorteilhaften Weiterbildung kann hierbei vorgesehen sein, dass erste Werkstücke von einer ersten Seite einer oder mehreren ersten Umformstationen zugeführt werden und zweite Werkstücke von einer zweiten Seite einer oder mehreren zweiten Umformstationen zugeführt werden, wobei eine dritte Umformstation zwischen den ersten und zweiten Umformstationen angeordnet ist, die insbesondere zum Verbinden jeweils eines Paares von einem ersten und einem zweiten Werkstück ausgebildet ist, und wobei jeweils erste Schlitten an jeder Schiene die Werkstücke von der zumindest einen ersten Umformstation ergreifen und in Richtung, insbesondere zu der dritten Umformstation transportieren und jeweils zweite Schlitten an jeder Schiene die Werkstücke von der zumindest einen zweiten Umformstation ergreifen und in Richtung, insbesondere zu der dritten Umformstation transportieren.

Bei dieser Ausführungsform kann man die einzelnen Werkstücke zunächst jeweils gesondert bearbeiten, bevor sie der mittleren, dritten Umformstation zugeführt werden; dort kann ein Abtransport der bearbeiteten Werkstücke erfolgen, bevorzugt aber werden diese verbunden, insbesondere gefügt; mit anderen Worten kann man ein Fügeteil in ein- und derselben Umformanlage zunächst in seinen beiden Einzelteilen bearbeiten, bevor diese Werkstücke dann zusammengesetzt werden. Die bevorzugten Arten des Fügens sind hierbei Umformen, etwa Kaltverpressen, Druckformen und Biegeformen, sowie Verschweißen, Kleben, Clinchen und Verbinden mittels Schrauben oder Nieten.

Weiter kann eine Einrichtung zum Wegführen von in der dritten Umformstation miteinander verbundenen Werkstücken vorgesehen sein.

Diese Einrichtung zum Wegführen ermöglicht eine reibungslose Bearbeitungsfolge in der Umformanlage, da sich die Werkstücke nicht ansammeln oder aufstauen, insbesondere, wenn die Werkstücke nicht untereinander gefügt werden sollen.

Die Umformanlage kann eine Steuereinrichtung umfassen, welche die Schlitten bewegende Aktoren ansteuert, wobei die Steuereinrichtung derart ausgelegt, insbesondere programmiert sein kann, dass die Schlitten unabhängig voneinander, insbesondere mit variierendem Abstand (in entgegengesetzter Richtung) zueinander bewegt werden, nämlich aufeinander zu und voneinander weg.

Bei dieser Ausführungsform kann ein- und dieselbe Transportvorrichtung durch geeignete Anpassung der Steuereinrichtung (nämlich insbesondere eben einer Programmierung der Steuereinrichtung) in unterschiedlichen Umformanlagen vorgesehen werden. Die Schlitten werden nicht aufgrund irgendeiner Kopplungsmechanik bewegt, sondern unabhängig voneinander angesteuert, was eine Vielzahl von Verfahrmöglichkeiten der Schlitten jeweils für sich und relativ zueinander ermöglicht.

Weiter kann vorgesehen sein, dass durch die zumindest zwei Schlitten an derselben Schiene aufgrund ihrer Ausgestaltung und/oder Anbindung an die Schiene ein jeweils unterschiedlicher Verfahrweg, insbesondere ein jeweils unterschiedlicher maximaler Verfahrweg, durchlaufbar ist.

Bei dieser Maßnahme kann die Transportvorrichtung zu den Umformstationen maßgeschneidert gebaut sein, so dass auf das Vorsehen eines für die besagte Umformanlage gar nicht notwendigen Verfahrwegs eines Schlittens verzichtet werden kann.

Bei der Anlage nach Anspruch 5 oder 6, auch in den bevorzugten Ausführungsformen, ist bevorzugt vorgesehen, dass einander entsprechende Schlitten der beiden Schienen parallel zueinander verfahren werden können. Dies entspricht der herkömmlichen Vorgehensweise, die vorliegend mit dem von einander unabhängigen Verfahren von zwei Schlitten an der jeweiligen selben Schiene einhergeht.

Es kann auch vorgesehen sein, dass zumindest ein und bevorzugt jeder Schlitten zum Ergreifen mehrerer Werkstücke aus unterschiedlichen Umformstationen dient. So ist es zum Beispiel möglich, dass für Untergruppen von Umformstationen, die jeweils denselben Abstand der zugehörigen Bearbeitungspositionen haben, ein- und derselbe Schlitten ein Werkstück aus einer ersten Umformstation zu einer benachbarten zweiten Umformstation transportiert und gleichzeitig aus einer zweiten Umformstation zu einer benachbarten dritten Umformstation transportiert (oder von einer dritten zu einer vierten). Der variierende Abstand zu einem anderen Schlitten trägt dann lediglich der Tatsache Rechnung, dass eine andere Gruppe von Umformstationen einen anderen Abstand zwischen deren jeweiligen Bearbeitungspositionen aufweist.

Die Aufgabe wird weiter durch ein Verfahren zum Transportieren von Werkstücken in einer Pressenanlage von jeweils einer Umformstation zu einer anderen Umformstation mittels zumindest einer Schiene, mit den Merkmalen des Anspruchs 8.

Hierbei kann der in einer Umformanlage vorhandene Platz dazu benutzt werden, unterschiedliche Bearbeitungslinien oder -zweige gleichzeitig durchlaufen zu lassen, ohne dass auf eine gemeinsame Transportvorrichtung verzichtet wird. Dadurch ist ein Nachrüsten mit einer solchen Transportvorrichtung auf eingeschränktem Platz möglich.

Es kann vorgesehen sein, dass die ersten und die zweiten Werkstücke zum Zwecke eines Verbindens (Fügens) jeweils eines Paares aus einem ersten und einem zweiten Werkstück aufeinander zu in eine gemeinsame Umformstation transportiert werden.

Möchte man erste und zweite Werkstücke miteinander verbinden und zuvor bearbeiten, müssen bisher mehrere Umformanlagen miteinander gekoppelt werden. Durch die genannte Ausführungsform können alle Bearbeitungsschritte in ein- und derselben Umformanlage erfolgen.

In einer ersten Arbeitsweise werden die ersten und die zweiten Werkstücke in jeweils demselben Arbeitsschritt aufeinander zu bewegt.

Bei einer zweiten Arbeitsweise wird in einem Arbeitsschritt das erste Werkstück über eine Teilstrecke auf das zweite Werkstück zu bewegt, und in einem gesonderten Arbeitsschritt wird später das zweite Werkstück auf das erste Werkstück zu bewegt, nämlich über die restliche Teilstrecke der ursprünglichen Distanz zwischen den beiden Werkstücken hinweg oder über etwas mehr als diese restliche Teilstrecke. Beide Werkstücke gelangen somit in dieselbe Umformstation. Sie können insbesondere übereinander gelegt werden.

Bei der zweiten Arbeitsweise kann insbesondere vorgesehen sein, dass ein Schlitten oder Schlittenpaar, der bzw. die das erste Werkstück transportiert, zwar in entgegen gesetzter Richtung bewegt wird, in der ein Schlitten oder Schlittenpaar bewegt wird, welcher bzw. welches das zweite Werkstück transportiert, dass aber aufgrund des zeitlichen Versatzes der erste Schlitten/das erste Schlittenpaar bereits wieder zurückgefahren wird, wenn der zweite Schlitten zur Umformstation gefahren wird. Der zweite Schlitten/das zweite Schlittenpaar musste zuvor stationär bleiben, also warten, bis der erste Schlitten/das erste Schlittenpaar das erste Werkstück abgelegt hat.

Gleichartige Umformstationen können spiegelbildlich zueinander angeordnet sein, sodass die ersten und die zweiten Werkstücke auf gleichartige Weise, insbesondere genau gleich, bearbeitet werden. Hier kann ein- und dieselbe Umformanlage so genutzt werden, dass gleichartige Bearbeitungsschritte an unterschiedlichen Werkstücken mehr oder weniger gleichzeitig durchgeführt werden.

Weiter kann vorgesehen sein, dass alle Werkstücke vermittels einander entsprechenden Schlitten beider Schienen und/oder Greifern an diesen Schlitten ergriffen werden und zumindest durch ein Verfahren der Schlitten, ggf. auch ein Verfahren der Schienen, bewegt werden. Hier wird an herkömmliche Arbeitsweisen angeknüpft.

Es kann vorgesehen sein, dass zum Ergreifen der Werkstücke zwei Schienen aufeinander zu gefahren werden und zum Transport die Schienen angehoben werden, und dass zum Absetzen der Werkstücke die Schienen heruntergefahren werden und auseinander bewegt werden. Auch hier wird an herkömmliche Arbeitsweisen angeknüpft.

Die Erfindung wird nun anhand von Ausführungsbeispielen näher erläutert. Es zeigen
- Fig. 1: ein Ausführungsbeispiel einer Transportvorrichtung einer bevorzugten Ausführungsform der erfindungsgemäßen Umformanlage in einer perspektivischen Prinzipdarstellung;
- Fig. 2a und 2b: ein Ausführungsbeispiel einer Transportvorrichtung einer bevorzugten Ausführungsform der erfindungsgemäßen Umformanlage in schematischer Darstellung;

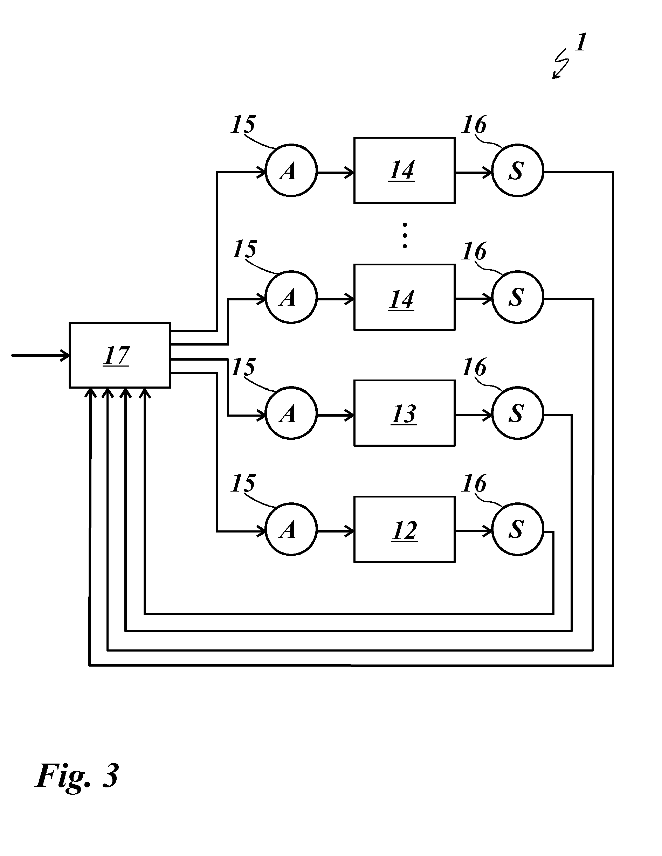

- Fig. 3: ein Blockschaltbild der Transporteinrichtung;
- Fig. 4: ein erstes Ausführungsbeispiel eines Schlittenantriebs;
- Fig. 5: ein zweites Ausführungsbeispiel eines Schlittenantriebs.

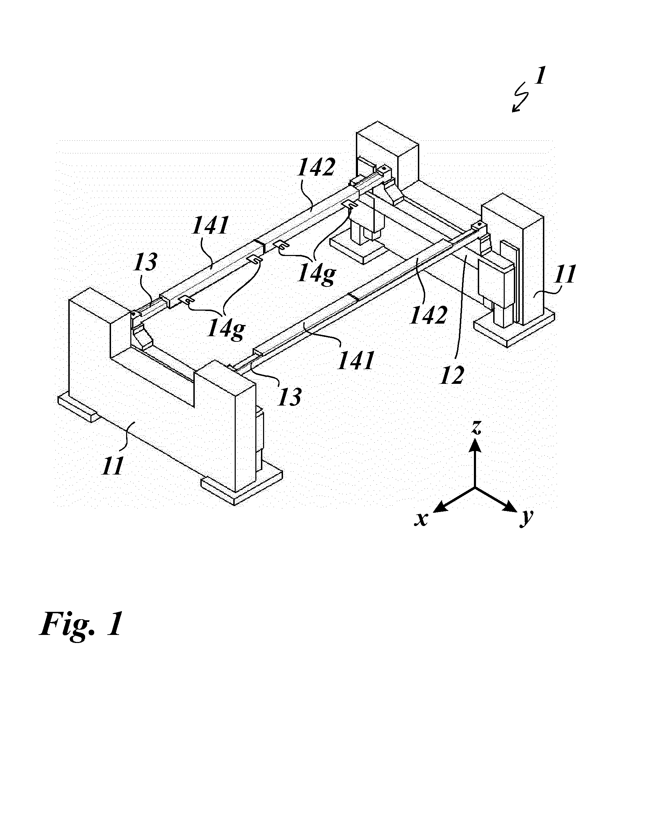

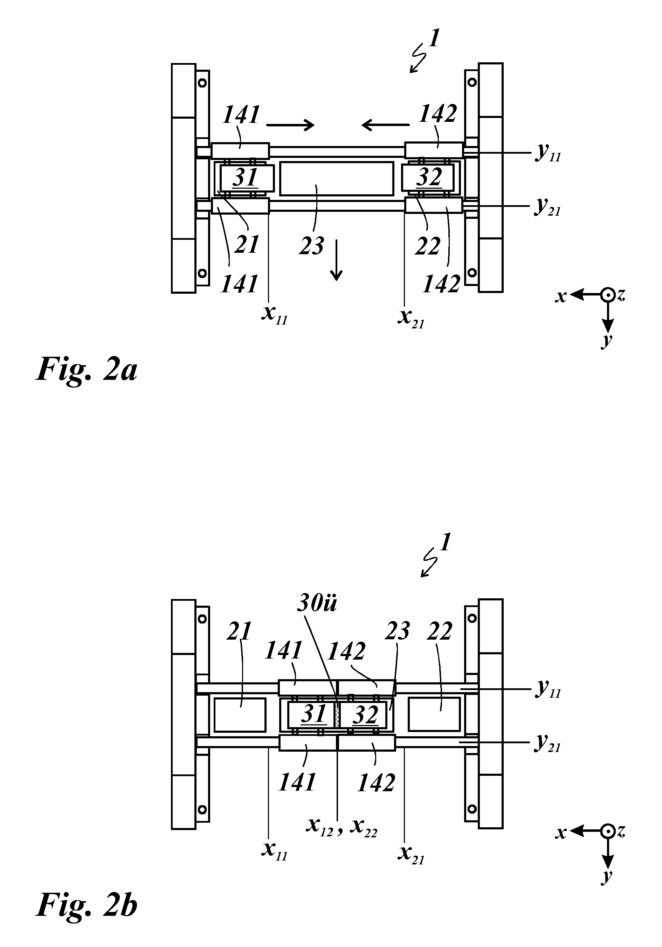

Fig. 1 zeigt eine Transportvorrichtung 1, die vorgesehen ist, um Werkstücke 31, 32 (siehe Fig. 2) von einer ersten Umformstation an eine zweite Umformstation einer Umformanlage zu übergeben (siehe Fig. 2).

In Fig. 1 sowie in der Fig. 2 ist zur Orientierung ein Koordinatensystem eingezeichnet, wobei die z-Achse die Vertikale bezeichnet und die x- und y-Achse horizontale Achsen sind.

Zu der in Fig. 1 dargestellten Transportvorrichtung 1 sind einander gegenüberstehende Lagerböcke 11 gezeigt. An diesen Lagerböcken 11 angeordnet sind Querträger 12, auf den Querträgern 12 abgestützt sind Längsträger, im Folgenden Schienen 13 genannt, sowie auf den Schienen 13 verfahrbar angeordnet und paarweise einander gegenüber angeordnet sind Schlitten. In dem in Fig. 1 dargestellten Ausführungsbeispiel sind zwei paarweise angeordnete Schlitten 141 und 142 vorgesehen.

Jeweils zwei einander gegenüberliegende Schlitten 141, 142 bilden ein Schlittenpaar und sind auf den Schienen 13 längs der x-Achse unabhängig verfahrbar, insbesondere in Richtung aufeinander zu und voneinander weg oder auch zusätzlich in dieselbe Richtung. Die Schlitten 141, 142 tragen an den einander zugewandten Seiten Greifer 14g, bei denen es sich beispielsweise um gabelförmige Greifer oder um aktiv bewegliche Greifer handeln kann, welche die Werkstücke 31, 32 ergreifen.

Die Schienen 13 sind auf den Querträgern 12 simultan in Richtung der y-Achse, das heißt simultan horizontal in eine Schließrichtung aufeinander zu und in eine Öffnungsrichtung voneinander weg bewegbar. Alternativ sind die Schienen 12 völlig unabhängig voneinander horizontal bewegbar.

Die Querträger 12 sind simultan in Richtung der z-Achse, das heißt simultan vertikal verfahrbar. Alternativ sind die Querträger 12 unabhängig voneinander vertikal verfahrbar. Mit den Querträgern 12 sind somit die Schienen 13 vertikal bewegbar. Somit sind die Schlitten 141 und 142 in eine vertikale Anhebrichtung anhebbar, um die ergriffenen Werkstücke abzuheben.

In Fig. 2a und 2b ist ein Ausführungsbeispiel der Transportvorrichtung 1 mit Schlitten 141 und 142 dargestellt, die zum Transport von Werkstücken zwischen (im vorliegenden Beispiel) drei hintereinander angeordneten Umformstationen 21 bis 23 vorgesehen sind.

Die Schlitten werden aufeinander zu und voneinander weg bewegt. Es sind äußere Umformstationen 21 und 22 vorgesehen, zwischen denen eine innere Umformstation 23 angeordnet ist. Die innere Umformstation 23 kann beispielsweise zum Verbinden, zum Fügen oder zur gemeinsamen Bearbeitung zweier Werkstücke 31, 32 vorgesehen sein, die von den der inneren Umformstation 23 benachbarten äußeren Umformstationen 21 und 22 zugeführt werden.

Es sind zwei unterschiedliche Arbeitsweisen möglich.

Die erste Arbeitsweise wird zunächst erläutert:
In dem in Fig. 2a dargestellten ersten Arbeitstakt nehmen die Greifer 14g der Schlitten 141 das in der Umformstation 21 abgelegte Werkstück 31 auf und die Greifer 14g der Schlitten 142 das in der Umformstation 22 abgelegte Werkstück 32. Die Schlitten 141 und 142 sind in ersten x- Positionen x₁₁ und x₂₁. Die Schienen 13 befinden sich in ersten y-Positionen y₁₁ und y₂₁. Die Querträger 12 sind in einer ersten z-Position z₁.

In einem zweiten Arbeitstakt werden die Werkstücke 31 und 32 aus den Umformstationen 21 und 22 entnommen, indem die Querträger 12 simultan auf eine zweite z-Position z₂ angehoben werden, die höher als die erste z-Position z₁ ist.

In einem dritten Arbeitstakt werden die Schlitten 141 und 142 auf den Schienen 13 in Richtung auf die Umformstation 23 verfahren und nehmen zweite x-Positionen x₁₂ und x₂₂ ein. Die Schlitten 141 und 142 sind nun an der Umformstation 23 angeordnet. Beim Verfahren der Schlitten 141 und 142 aufeinander zu wird der Abstand zwischen den Schlitten variiert. Dieses Verfahren kann bei der ersten Arbeitsweise insbesondere zugleich erfolgen, d.h. so, dass in einem überlappenden Zeitabschnitt beide Schlitten gleichzeitig bewegt werden. Die Schienen 13 befinden sich unverändert in den ersten y-Positionen y₁₁ und y₂₁, die Querträger in der zweiten z-Position z₂.

In einem in Fig. 2b dargestellten vierten Arbeitstakt werden die Werkstücke 31 und 32 in der Umformstation 23 abgelegt, indem die Querträger 12 wieder auf die erste z-Position z₁ abgesenkt werden. Die Greifer 14g der Schlitten 141 untergreifen noch das in der Umformstation 23 abgelegte Werkstück 31 sowie die Greifer 14g der Schlitten 142 untergreifen noch das ebenfalls in der Umformstation 23 abgelegte Werkstück 32. Die Werkstücke 31 und 32 sind in einem Überlappungsbereich 30ü übereinander angeordnet und können in diesem Überlappungsbereich beispielsweise durch Umformen miteinander verbunden werden. Der Überlappungsbereich 30ü kann ein Bereich teilweiser Überlappung der Werkstücke 31 und 32 sein, es kann sich jedoch auch um einen vollständigen Überlapp handeln (was in der Figur nicht gezeigt ist). Die Entnahme des aus den beiden Werkstücken 31 und 32 gebildeten Werkstücks nach der Umformung kann senkrecht zu der Transportrichtung der Schlitten 141, 142 vorgesehen sein.

In einem fünften Arbeitstakt werden die Schienen 13 auseinander gefahren und in zweite y-Positionen y₁₂ und y₂₂ gebracht, wodurch die Greifer 14g der Schlitten 141 und 142 außer Eingriff mit den Werkstücken 31 und 32 gelangen.

In einem sechsten Arbeitstakt werden die Schlitten 141 und 142 in Richtung auf die äußeren Umformstationen 21 und 22 zurück verfahren. Die Schlitten 141 und 142 sind wieder an den äußeren Umformstationen 21 und 22 angeordnet und nehmen die ersten x-Positionen x₁₁ und x₂₁ ein. Bei diesem Verfahren auseinander wird ebenfalls der Abstand zwischen den Schlitten 141 und 142 variiert, nämlich vorliegend vergrößert. Das Verfahren erfolgt insbesondere zugleich, d.h. es gibt zumindest einen Zeitabschnitt, in dem beide Schlitten 141 und 142 bewegt werden. Die Schienen 13 befinden sich unverändert in den zweiten y-Positionen in und y₂₁, die Querträger 12 in der ersten z-Position z₁.

In einem siebten Arbeitstakt werden die Schienen 13 in die ersten y-Positionen y₁₁ und y₁₂ gebracht, so dass die Greifer 14g der Schlitten 141 und 142 in den äußeren Umformstationen 21 und 22 abgelegte neue Werkstücke untergreifen.

Der erste Abstand zwischen der ersten Position x₁₁ einerseits und der zweiten Position x₁₂ andererseits kann verschieden sein von dem zweiten Abstand zwischen der zweiten Position x₂₁ einerseits und der zweiten Position x₂₂ andererseits. In diesem Falle können die Schlitten 141 und 142 mit unterschiedlichen Geschwindigkeiten aufeinander zu bzw. voneinander weg gefahren werden. Außerdem können in einer Folge von mehreren Umformstationen unterschiedliche Abstände zwischen diesen vorliegen. Wenn dann mehrere Schlitten gleichsinnig bewegt werden, kann dies wegen der unterschiedlichen Abstände zwischen den Umformstationen mit variierendem Abstand erfolgen (durch unterschiedliche Verfahrgeschwindigkeit). Dies kann auf einer Seite erfolgen, oder auf beiden Seiten mit jeweils einer Mehrzahl von gleichsinnig bewegten Schlitten, die im Verhältnis zueinander aufeinander zu bewegt werden.

Nun wird die zweite Arbeitsweise der Transportvorrichtung 1 mit den Schlitten 141 und 142 gemäß Fig. 2a und 2b erläutert:

In einem ersten Arbeitstakt nehmen die Greifer 14g der Schlitten 141 das in der Umformstation 21 abgelegte Werkstück 31 auf. Hingegen nehmen noch nicht die Greifer 14g der Schlitten 142 das in der Umformstation 22 abgelegte Werkstück auf. Die Schlitten 141 und 142 sind in ersten x-Positionen x₁₁ und x₂₁. Die Schienen befinden sich in ersten y-Positionen y₁₁ und y₂₁. Die Querträger sind in einer ersten z-Position z₁.

In einem zweiten Arbeitstakt wird das Werkstück 31 aus der Umformstation 21 entnommen, in dem die Querträger 12 simultan auf eine z-Position z₂ angehoben werden, die höher als die erste z-Position z₁ ist.

In einem dritten Arbeitstakt werden die Schlitten 141 auf den Schienen 13 in Richtung auf die Umformstation 23 auf die x-Position x₁₂ verfahren. Die Schlitten 142 werden nicht verfahren. Beim Verfahren der Schlitten 141 auf die Schlitten 142 zu wird der Abstand zwischen den Schlitten 141 und 142 variiert. Die Schienen befinden sich unverändert in den ersten y-Positionen y₁₁ und y₂₁, die Querträger in der zweiten z-Position z₂.

In einem vierten Arbeitstakt werden die Werkstücke 31 in der Umformstation 23 abgelegt, indem die Querträger 12 wieder auf die erste z-Position z₁ abgesenkt werden. Die Greifer 14g der Schlitten 141 untergreifen noch das in der Umformstation 23 abgelegte Werkstück 31.

In einem fünften Arbeitstakt werden die Schienen 13 auseinander gefahren und in zweite y-Positionen y₁₂ und y₂₂ gebracht, wodurch die Greifer 14g der Schlitten 141 außer Eingriff mit dem Werkstück 31 gelangen.

In einem sechsten Arbeitstakt werden die Schienen 13 in die ersten y-Positionen y₁₁ und y₁₂ gebracht, so dass die Greifer 14g der Schlitten 142 ein in der äußeren Umformstation 22 abgelegtes Werkstück 32 untergreifen.

In einem siebten Arbeitstakt wird das Werkstück 32 aus der Umformstation 22 entnommen, in dem die Querträger 12 simultan wieder auf die zweite z-Position z₂ angehoben werden.

In einem achten Arbeitstakt werden die Schlitten 142 auf den Schienen 13 in Richtung auf die Umformstation 23 verfahren und nehmen eine zweite x-Position x₂₂ ein. Die Schlitten 141 werden im selben Arbeitstakt, bevorzugt zugleich mit den Schlitten 142, verfahren, nämlich von der inneren Umformstation 22 zu der äußeren Umformstation 21. Die Schienen 13 befinden sich in den ersten y-Positionen y₁₁ und y₂₁, die Querträger in der zweiten z-Position z₂.

In einem neunten Arbeitstakt wird das Werkstück 32 in der Umformstation 23 abgelegt, indem die Querträger 12 wieder auf die erste z-Position z₁ abgesenkt werden. Die Greifer 14g der Schlitten 142 untergreifen noch das in der Umformstation 23 abgelegte Werkstück 32. Nunmehr sind die Werkstücke 31 und 32 in dem Überlappungsbereich 30ü übereinander angeordnet. Im Falle der zweiten Arbeitsweise kann es sich insbesondere um einen vollständigen Überlapp handeln.

In einem zehnten Arbeitstakt werden die Schienen 13 auseinander gefahren und in die zweiten y-Positionen y₁₂ und y₂₂ gebracht, wodurch durch die Greifer 14g der Schlitten 142 außer Eingriff mit dem Werkstück 22 gelangen.

In einem elften Arbeitstakt erfolgt ein Fügen der beiden Werkstücke 31 und 32 in der Umformstation 23, also durch das Werkzeug der Presse.

Zugleich werden die Schlitten 142 zu der äußeren Umformstation 22 (Position x₂₁) zurück verfahren.

Anschließend beginnt wieder der erste Arbeitstakt, in dem die Schienen 13 in die ersten y-Positionen y₁₁ und y₂₁ in Richtung aufeinander zu simultan verfahren werden. In den Umformstationen 21 und 22 stehen neue Werkstücke 30 und 31 bereit.

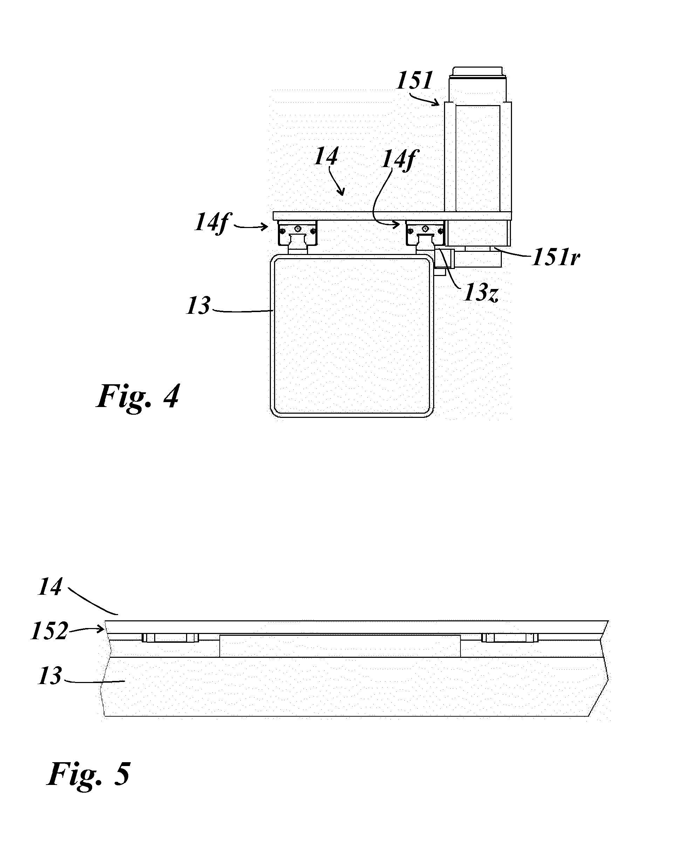

Fig. 4 zeigt ein Blockschaltbild der Transporteinrichtung 1.

Eine Steuereinrichtung 17 ist ausgangsseitig mit Aktoren 15 verbunden, bei denen es sich beispielsweise um Elektromotoren mit Drehabtrieb oder Linearabtrieb handeln kann, die mit den Querträgern 12, den Schienen 13 und Schlitten 14 bewegungsstarr verbunden sind. Weiter sind Sensoren, vorzugsweise Lagesensoren, vorgesehen, die eingangsseitig mit den Querträgern 12, den Schienen 13 und den Schlitten 14 verbunden sind und ausgangsseitig mit Eingängen der Steuereinrichtung 17 verbunden sind. Auf diese Weise ist es möglich, die Transporteinrichtung 1 für unterschiedliche Transportaufgaben einzusetzen, ohne den mechanischen Aufbau zu konfigurieren. So ist es beispielsweise bei dem in Fig. 2 vorbeschriebenen Ausführungsbeispiel bei gleichem mechanischen Aufbau durch Änderungen der Programmierung der Steuereinrichtung 17 möglich, die Schlitten 141 und 142 auch parallel zueinander, ggf. mit variierendem Abstand zu verfahren.

Die Programmierung der Steuereinrichtung 17 kann insbesondere ein gleichzeitiges Verfahren der Schlitten 141 und 142 in der oben beschriebenen Weise, also mit variierendem Abstand (vorliegend aufeinander zu bzw. voneinander weg), bewirken. Dieses Verfahren kann bevorzugt, insbesondere aufgrund der Programmierung, sogar simultan erfolgen, d.h. die Stellung des einen Schlittens 141 entspricht einer vorbestimmten Stellung des anderen Schlittens 142. Alternativ wäre es allerdings auch möglich, die Schlitten 141 und 142 unabhängig voneinander zu bewegen, so dass sie nicht notwendigerweise zugleich verfahren werden müssen. Sobald aber einer der Schlitten bewegt wird und der andere nicht, variiert der Abstand der Schlitten 141 und 142.

Die Fig. 5 und 6 zeigen Ausführungsbeispiele für die Antriebe der Schlitten.

Fig. 5 zeigt einen Schlittenantrieb, bei dem der Schlitten 14 auf Schlittenführungen 14f gelagert ist, die auf der Schiene 13 voneinander beabstandet angeordnet sind. An dem Schlitten 14 ist ein elektrischer Antriebsmotor 15 angeordnet, dessen Abtrieb als ein Abtriebsritzel 15r ausgebildet ist und mit einer an der Schiene angeordneten Zahnstange 13z zusammenwirkt.

Fig. 6 zeigt einen Schlittenantrieb mit einem Linearmotor 16, der auf der Schiene 13 angeordnet ist, wobei der Stator des Linearmotors 16 mit der Schiene 13 starr verbunden ist und der Läufer des Linearmotors 16 mit dem Schlitten 14 starr verbunden ist.

Anstelle eines Schlittenantriebs mit Zahnstange und Abtriebsritzel oder mit Linearantrieb können auch ein Spindelantrieb oder ein Zahnriemenantrieb vorgesehen werden. Alle genannten Antriebe können zudem auch in beliebigen Kombinationen vorgesehen werden.

### Bezugszeichenliste

- 1: Transportvorrichtung
- 11: Lagerbock
- 12: Querträger
- 13: Schiene
- 13z: Zahnstange
- 14: Schlitten
- 14f: Schlittenführung
- 14g: Greifer
- 15: Aktor
- 16: Sensor
- 17: Steuereinrichtung
- 21 bis 23: Umformstation
- 30ü: Überlappungsbereich
- 31, 32: Werkstück
- 141,142: Schlitten
- 151: Antriebsmotor
- 151 r: Abtriebsritzel
- 152: Linearmotor

## Patentansprüche

1. Umformanlage für vorzugsweise metallische Werkstücke (31, 32), vorzugsweise als Pressenanlage,
mit mehreren Umformstationen (21-23) und mit einer Transportvorrichtung (1) zum Transportieren der Werkstücke (31, 32),
wobei die Transportvorrichtung (1) zumindest eine Schiene (13) aufweist, die zumindest zwei gegenüber der Schiene (13) bewegliche, insbesondere verfahrbare Schlitten (141, 142) trägt,
wobei die Schlitten (141, 142) als Teil einer Greifeinrichtung ausgebildet sind und/oder jeweils mindestens einen Greifer (14g) tragen,
und wobei die zumindest eine Schiene (13) und/oder die Schlitten (141, 142) zumindest in eine Transportrichtung bewegbar sind, um von der Greifeinrichtung bzw. den Greifern (14g) ergriffene Werkstücke von einer Umformstation (21-23) zu einer anderen Umformstation (21-23) zu transportieren,
**dadurch gekennzeichnet,**
**dass** die Anlage eine Steuereinrichtung umfasst, welche die Schlitten (141, 142) bewegende Aktoren (15, 16) ansteuert, wobei die Steuereinrichtung derart ausgelegt und/oder programmiert ist, dass die Schlitten (141, 142) unabhängig voneinander bewegbar sind, so dass zumindest zwei Schlitten (141, 142) an derselben Schiene (13) beim jeweiligen Transportieren der Werkstücke (31, 32) von einer Umformstation (21-23) zu einer anderen Umformstation (21-23) mit variierendem Abstand zueinander bewegbar sind, indem sie in die entgegen gesetzte Richtung verfahren werden.

2. Umformanlage für vorzugsweise metallische Werkstücke (31, 32), vorzugsweise als Pressenanlage,
mit mehreren Umformstationen (21-23) und mit einer Transportvorrichtung (1) zum Transportieren der Werkstücke (31, 32),
wobei die Transportvorrichtung (1) zumindest eine Schiene (13) aufweist, die zumindest zwei gegenüber der Schiene (13) bewegliche, insbesondere verfahrbare Schlitten (141, 142) trägt,
wobei die Schlitten (141, 142) als Teil einer Greifeinrichtung ausgebildet sind und/oder jeweils mindestens einen Greifer (14g) tragen,
und wobei die zumindest eine Schiene (13) und/oder die Schlitten (141, 142) zumindest in eine Transportrichtung bewegbar sind, um von der Greifeinrichtung bzw. den Greifern (14g) ergriffene Werkstücke von einer Umformstation (21-23) zu einer anderen Umformstation (21-23) zu transportieren,
**dadurch gekennzeichnet,**
**dass** die Anlage eine Steuereinrichtung umfasst, welche die Schlitten (141, 142) bewegende Aktoren (15, 16) ansteuert, wobei die Steuereinrichtung derart ausgelegt und/oder programmiert ist, dass die Schlitten (141, 142) unabhängig voneinander bewegbar sind, so dass
a) ein erster Schlitten (141) von zwei Schlitten an derselben Schiene (13) ein erstes Werkstück (31) von einer Umformstation (21) zu einer anderen Umformstation (23) in eine erste Richtung bewegt, und
b) **dass** während a) oder nach Abschluss von a) ein zweiter Schlitten (142) der zwei Schlitten an derselben Schiene (13) ein zweites Werkstück (32) von einer Umformstation (22) zu der anderen Umformstation (23) in die zu der ersten Richtung entgegengesetzte Richtung bewegt.

3. Umformanlage nach Anspruch 2,
**dadurch gekennzeichnet, dass**
die Steuereinrichtung so ausgelegt ist, dass
während a) der zweite Schlitten nicht bewegt wird, und/oder dass während b) der erste Schlitten in die zur ersten Richtung entgegen gesetzte Richtung zurückbewegt wird.

4. Umformanlage nach einem der vorangehenden Ansprüche,
wobei die Transportvorrichtung (1) zumindest zwei Schienen (13) aufweist, die jeweils zumindest zwei gegenüber den Schienen (13) bewegliche, insbesondere verfahrbare Schlitten (141, 142) tragen,
wobei die Schlitten (141, 142) der beiden Schienen (13) einander paarweise entsprechen,
wobei die Schienen (13) zum Ergreifen eines oder mehrerer Werkstücke (31, 32) in eine Schließrichtung aufeinander zu bewegbar sind, wobei die Schienen (13) und/oder die Schlitten (141, 142) jeweils in eine Transportrichtung senkrecht zur Schließrichtung horizontal bewegbar sind, um die Werkstücke (31, 32) von einer Umformstation (21-23) zu einer anderen Umformstation (21-23) zu transportieren, und
wobei die Schienen voneinander weg bewegbar sind, um die Werkstücke (31, 32) abzusetzen.

5. Umformanlage nach Anspruch 4,
wobei die Schiene in eine vertikale Anheberichtung anhebbar sind, um die ergriffenen Werkstücke (31, 32) abzuheben und in einer Richtung entgegen der vertikalen Anheberichtung absenkbar sind, um die Werkstücke abzusetzen, und vorzugsweise vorgesehen ist,
dass einander entsprechende Schlitten (141, 142) der beiden Schienen (13) parallel zueinander verfahren werden.

6. Umformanlage nach einem der vorhergehenden Ansprüche,
bei der erste Werkstücke (31) von einer ersten Seite einer oder mehreren ersten Umformstationen (21) zugeführt werden und zweite Werkstücke (32) von einer zweiten Seite einer oder mehreren zweiten Umformstationen (22) zugeführt werden, wobei eine dritte Umformstation (23) zwischen den ersten und zweiten Umformstationen (22) angeordnet ist, die insbesondere zum Verbinden jeweils eines Paares von einem ersten und einem zweiten Werkstück (31, 32) ausgebildet ist, und wobei jeweils erste Schlitten (141) an jeder Schiene die Werkstücke (31) von der zumindest einen ersten Umformstation (21) ergreifen und in Richtung der dritten Umformstation (23) transportieren und jeweils zweite Schlitten (142) an jeder Schiene (13) die Werkstücke (32) von der zumindest einen zweiten Umformstation (22) ergreifen und in Richtung der dritten Umformstation (23) transportieren, und vorzugsweise mit einer Einrichtung zum Wegführen von in der dritten Umformstation (23) miteinander verbundenen Werkstücken.

7. Umformanlage nach einem der vorhergehenden Ansprüche,
**dadurch gekennzeichnet,**
**dass** durch die zumindest zwei Schlitten (141, 142) an derselben Schiene (13) aufgrund ihrer Ausgestaltung und/oder Anbindung an die Schiene (13) ein jeweils unterschiedlicher Verfahrweg, insbesondere ein jeweils unterschiedlicher maximaler Verfahrweg, durchlaufbar ist, und vorzugsweise vorgesehen ist, dass zumindest ein und bevorzugt jeder Schlitten zum Ergreifen mehrerer Werkstücke aus unterschiedlichen Umformstationen dient.

8. Verfahren zum Transportieren von Werkstücken (31, 32) in einer Pressenanlage von jeweils einer Umformstation (21-23) zu einer anderen Umformstation (21-23) mittels zumindest einer Schiene (13), wobei an der zumindest einen Schiene zumindest zwei gegenüber dieser Schiene (13) verfahrbare Schlitten (141, 142) angeordnet sind,
**dadurch gekennzeichnet,**
**dass** erste Werkstücke (31) und zweite Werkstücke (32) in entgegen gesetzter Richtung bewegt werden so dass die ersten und die zweiten Werkstücke (31, 32) zum Zwecke eines Verbindens jeweils eines Paares aus einem ersten und einem zweiten Werkstück (31, 32) aufeinander zu in eine gemeinsame Umformstation (23) transportiert werden

9. Verfahren nach Anspruch 8,
**dadurch gekennzeichnet,**
**dass** das Verbinden ein Fügen, vorzugsweise durch Umformen, Verschweißen, Kleben, Clinchen oder mittels Schrauben oder Nieten umfasst.

10. Verfahren nach einem der Ansprüche 8 oder 9,
**dadurch gekennzeichnet,**
**dass** ein erstes Werkstück (31) und ein zweites Werkstück (32) in demselben Arbeitstakt, insbesondere simultan, aufeinander zu bewegt werden, wobei insbesondere vorgesehen ist, dass zunächst ein erstes Werkstück (31) in Richtung eines zweiten Werkstückes (32) bewegt wird, und sodann das zweite Werkstück (32) zu dem ersten Werkstück (31) bewegt wird.

11. Verfahren nach einem der Ansprüche 8 bis 10,
**dadurch gekennzeichnet,**
**dass** gleichartige Umformstationen (21, 22) spiegelbildlich zueinander angeordnet sind, sodass die ersten und die zweiten Werkstücke (31, 32) auf gleichartige Weise bearbeitet werden.

12. Verfahren nach einem der Ansprüche 8 bis 11,
**dadurch gekennzeichnet,**
**dass** das Transportieren mittels zumindest eines Paares von Schienen (13) erfolgt, und dass alle Werkstücke (31, 32) vermittels einander entsprechenden Schlitten (141, 142) beider Schienen (13) und/oder Greifern (14g) an diesen Schlitten (141, 142) ergriffen werden und zumindest durch ein Verfahren der Schlitten (141, 142) bewegt werden.

13. Verfahren nach Anspruch 12,
**dadurch gekennzeichnet,**
**dass** zum Ergreifen der Werkstücke (31, 32) die Schienen (13) aufeinander zu gefahren werden und zum Transport die Schienen (13) angehoben werden, und dass zum Absetzen der Werkstücke die Schienen (13) heruntergefahren werden und auseinander bewegt werden.

14. Verfahren nach Anspruch 12 oder 13,
**dadurch gekennzeichnet,**
**dass** alle Werkstücke (31, 32) auch durch ein Verfahren der Schienen (13) bewegt werden.

15. Verfahren nach einem der Ansprüche 8 bis 14,
**dadurch gekennzeichnet,**
**dass** es in einer Umformanlage nach einem der Ansprüche 1 bis 10 erfolgt.

## Claims

1. Forming system for preferably metallic workpieces (31, 32), preferably as a pressing system,
having several forming stations (21-23) and having a transportation device (1) to transport the workpieces (31, 32),
wherein the transportation device (1) has at least one rail (13) which supports at least two carriages (141, 142) which are able to move, in particular are able to be displaced, with regard to the rail (13),
wherein the carriages (141, 142) are formed as a part of a grip device and/or each support at least one gripper (14g),
and wherein the at least one rail (13) and/or the carriages (141, 142) are able to move at least in a transportation direction in order to transport workpieces gripped by the grip device or the grippers (14g) from one forming station (21-23) to another forming station (21-23),
**characterised in that**
the system comprises a control device which controls actuators (15, 16) that move the carriages (141, 142), wherein the control device is designed and/or programmed in such a way that the carriages (141, 142) are able to move independently of one another, such that at least two carriages (141, 142) are able to move at varying distances from one another on the same rail (13) during the respective transporting of the workpieces (31, 32) from one forming station (21, 23) to another forming station (21, 23) as they are displaced in the opposite direction.

2. Forming system for preferably metallic workpieces (31, 32), preferably as a pressing system,
having several forming stations (21-23) and having a transportation device (1) to transport the workpieces (31, 32),
wherein the transportation device (1) has at least one rail (13) which supports at least two carriages (141, 142) which are able to move, in particular are able to be displaced, with regard to the rail (13),
wherein the carriages (141, 142) are formed as a part of a grip device and/or each support at least one gripper (14g),
and wherein the at least one rail (13) and/or the carriages (141, 142) are able to move at least in a transportation direction in order to transport workpieces gripped by the grip device or the grippers (14g) from one forming station (21-23) to another forming station (21-23),
**characterised in that**
the system comprises a control device which controls actuators (15, 16) that move the carriages (141, 142), wherein the control device is designed and/or programmed in such a way that the carriages (141, 142) are able to move independently of one another, such that
a) a first carriage (141) of two carriages on the same rail (13) moves a first workpiece (31) from one forming station (21) to another forming station (23) in a first direction, and
b) during a) or after completion of a), a second carriage (142) of two carriages on the same rail (13) moves a second workpiece (32) from one forming station (22) to the other forming station (23) in the direction which is opposite to the first direction.

3. Forming system according to claim 2,
**characterised in that**
the control device is designed such that during a), the second carriage is not moved, and/or during b), the first carriage is moved back in the direction which is opposite to the first direction.

4. Forming system according to one of the preceding claims, wherein the transportation device (1) has at least two rails (13) which support the at least two carriages (141, 142) which are able to move, in particular are able to be displaced, with regard to the rail (13) respectively, wherein the carriages (141, 142) of the two rails (13) correspond to each other in pairs,
wherein the rails (13) are able to move towards each other in a closing direction to grip one or more workpieces (31, 32),
wherein the rails (13) and/or the carriages (141, 142) are each able to move horizontally in a transportation direction perpendicular to the closing direction in order to transport the workpieces (31, 32) from one forming station (21-23) to another forming station (21-23), and wherein the rails are able to move away from each other in order to set down the workpieces (31, 32).

5. Forming system according to claim 4,
wherein the rails are able to be lifted in a vertical lifting direction in order to withdraw the gripped workpieces (31, 32), and are able to be lowered in a direction opposite the vertical lifting direction in order to set the workpieces down, and preferably it is provided that
carriages (141, 142) of the two rails (13) which correspond to one another are displaced in parallel to one another.

6. Forming system according to one of the preceding claims, in which the first workpieces (31) are supplied from a first side to one or more first forming stations (21) and second workpieces (32) are supplied from a second side to one or more second forming stations (22), wherein a third forming station (23) is arranged between the first and second forming stations (22), which is formed in particular to connect a pair of a first and a second workpiece (31, 32) respectively, and wherein first carriages (141) grip the workpieces (31) from the at least one first forming station (21) on each rail respectively and transport them in the direction of the third forming station (23), and second carriages grip the work pieces (32) from the at least one second forming station (22) on each rail (13) respectively and transport them in the direction of the third forming station (23), and preferably with a device to guide away workpieces connected to one another in the third forming station (23).

7. Forming system according to one of the preceding claims,
**characterised in that**
a respectively different drive path, in particular a respectively different maximum drive path, is able to be traversed by the at least two carriages (141, 142) on the same rail (13) due to their design and/or connection to the rail (13), and preferably it is provided that at least one and preferably each carriage serves to grip several workpieces from different forming stations.

8. Method to transport workpieces (31, 32) in a press system from one forming station (21-23) to another forming station (21-23) respectively by means of at least one rail (13), wherein at least two carriages (141, 142) which are able to be displaced with regard to this rail (13) are arranged on the at least one rail,
**characterised in that**
first workpieces (31) and second workpieces (32) are moved in opposite directions such that the first and the second workpieces (31, 32) are transported towards one another into a common forming station (23) for the purpose of a connection of a pair of a first and a second workpiece (31, 32) respectively.

9. Method according to claim 8,
**characterised in that**
the connection comprises a joining, preferably by forming, welding, adhering, clinching or by means of screws or rivets.

10. Method according to one of claims 8 or 9,
**characterised in that**
a first workpiece (31) and a second workpiece (32) are to be moved towards each other in the same work cycle, in particular simultaneously, wherein in particular it is provided that firstly a first workpiece (31) is moved in the direction of a second workpiece (32), and then the second workpiece (32) is moved towards the first workpiece (31).

11. Method according to one of claims 8 to 10,
**characterised in that**
similar forming stations (21, 22) are arranged to be mirror-inverted with respect to each other, such that the first and the second workpieces (31, 32) are processed in the same way.

12. Method according to one of claims 8 to 11,
**characterised in that**
the transporting occurs by means of at least one pair of rails (13), and all workpieces (31, 32) are gripped by means of carriages (141, 142) of both rails (13) which correspond to one another and/or grippers (14g) on these carriages (141, 142) and are moved at least by one displacement of the carriages (141, 142).

13. Method according to claim 12,
**characterised in that**
to grip the workpieces (31, 32), the rails (13) are driven towards one another and, to transport the rails (13), are lifted, and to set down the workpieces, the rails (13) are driven downwards and are moved away from each other.

14. Method according to claim 12 or 13,
**characterised in that**
all workpieces (31, 32) are also moved by a displacement of the rails (13).

15. Method according to one of claims 8 to 14,
**characterised in that**
it occurs in a forming system according to one of claims 1 to 10.

## Revendications

1. Installation de façonnage pour de préférence des pièces (31, 32) métalliques, de préférence en tant qu'installation de pressage,
avec plusieurs postes de façonnage (21-23) et avec un dispositif de transport (1) pour le transport des pièces (31, 32),
le dispositif de transport (1) présentant au moins un rail (13) qui porte au moins deux chariots (141, 142) mobiles, en particulier déplaçables, par rapport au rail (13),
les chariots (141, 142) étant constitués en tant que partie d'un dispositif de préhension et/ou portant respectivement au moins un grappin (14g),
et le rail (13) au moins au nombre de un et/ou les chariots (141, 142) étant mobiles au moins dans une direction de transport pour transporter d'un poste de façonnage (21-23) à un autre poste de façonnage (21-23) des pièces agrippées par le dispositif de préhension ou respectivement par les grappins (14g),
**caractérisée en ce que**
l'installation comprend un dispositif de commande qui pilote des actionneurs (15, 16) déplaçant les chariots (141, 142), le dispositif de commande étant conçu et/ou programmé de telle sorte que les chariots (141, 142) sont mobiles indépendamment les uns des autres de telle sorte qu'au moins deux chariots (141, 142) sont mobiles sur le même rail (13) avec une distance qui varie l'un par rapport à l'autre lors du transport respectif des pièces (31, 32) d'un poste de façonnage (21-23) à un autre poste de façonnage (21-23) par le fait qu'ils sont déplacés dans la direction opposée.

2. Installation de façonnage pour de préférence des pièces (31, 32) métalliques, de préférence en tant qu'installation de pressage,
avec plusieurs postes de façonnage (21-23) et avec un dispositif de transport (1) pour le transport des pièces (31, 32),
le dispositif de transport (1) présentant au moins un rail (13) qui porte au moins deux chariots (141, 142) mobiles, en particulier déplaçables, par rapport au rail (13),
les chariots (141, 142) étant constitués en tant que partie d'un dispositif de préhension et/ou portant respectivement au moins un grappin (14g),
et le rail (13) au moins au nombre de un et/ou les chariots (141, 142) étant mobiles au moins dans une direction de transport pour transporter d'un poste de façonnage (21-23) à un autre poste de façonnage (21-23) des pièces agrippées par le dispositif de préhension ou respectivement par les grappins (14g),
**caractérisée en ce que**
l'installation comprend un dispositif de commande qui pilote des actionneurs (15, 16) déplaçant les chariots (141, 142), le dispositif de commande étant conçu et/ou programmé de telle sorte que les chariots (141, 142) sont mobiles indépendamment les uns des autres de telle sorte
a) qu'un premier chariot (141) de deux chariots déplace sur le même rail (13) une première pièce (31) d'un poste de façonnage (21) à un autre poste de façonnage (23) dans une première direction, et
b) que, pendant a) ou à l'expiration de a), un deuxième chariot (142) des deux chariots déplace sur le même rail (13) une deuxième pièce (32) d'un poste de façonnage (22) à l'autre poste de façonnage (23) dans la direction opposée à la première direction.

3. Installation de façonnage selon la revendication 2,
**caractérisée en ce que**
le dispositif de commande est constitué de telle sorte que,
pendant a), le deuxième chariot n'est pas déplacé, et/ou de telle sorte que
pendant b), le premier chariot est ramené en arrière dans la direction inverse à la première direction.

4. Installation de façonnage selon l'une des revendications précédentes,
le dispositif de transport (1) présentant au moins deux rails (13) qui portent respectivement au moins deux chariots (141, 142) mobiles, en particulier déplaçables, par rapport aux rails (13),
les chariots (141, 142) des deux rails (13) se correspondant par paires,
les rails (13) étant mobiles l'un vers l'autre dans une direction de fermeture pour l'agrippement d'une ou de plusieurs pièces (31, 32),
les rails (13) et/ou les chariots (141, 142) étant respectivement mobiles horizontalement dans une direction de transport perpendiculairement à la direction de fermeture pour transporter les pièces (31, 32) d'un poste de façonnage (21-23) à un autre poste de façonnage (21-23), et
les rails pouvant être écartés l'un de l'autre pour déposer les pièces (31, 32).

5. Installation de façonnage selon la revendication 4,
les rails pouvant être soulevés dans une direction de soulèvement verticale pour retirer les pièces (31, 32) agrippées et pouvant être abaissés dans une direction opposée à la direction de soulèvement verticale pour poser les pièces, et étant de préférence prévu
que des chariots (141, 142) qui se correspondent des deux rails (13) sont déplacés parallèlement les uns aux autres.

6. Installation de façonnage selon l'une des revendications précédentes,
dans laquelle des premières pièces (31) d'un premier côté sont conduites à un ou plusieurs premiers postes de façonnage (21), et des deuxièmes pièces (32) d'un deuxième côté sont conduites à un ou plusieurs deuxièmes postes de façonnage (22), un troisième poste de façonnage (23) étant disposé entre les premiers et deuxièmes postes de façonnage (22) et étant constitué en particulier pour le raccordement de respectivement une paire d'une première et d'une deuxième pièce (31, 32), et respectivement des premiers chariots (141) agrippant sur chaque rail les pièces (31) du premier poste de façonnage (21) au moins au nombre de un et les transportant en direction du troisième poste de façonnage (23), et respectivement des deuxièmes chariots (142) agrippant sur chaque rail (13) les pièces (32) du deuxième poste de façonnage (22) au moins au nombre de un et les transportant en direction du troisième poste de façonnage (23), et de préférence avec un dispositif d'enlèvement de pièces raccordées les unes aux autres dans le troisième poste de façonnage (23).

7. Installation de façonnage selon l'une des revendications précédentes,
**caractérisée en ce**
**qu'**un chemin de déplacement respectivement différent, en particulier un chemin de déplacement maximal respectivement différent, peut être parcouru par les chariots (141, 142) au moins au nombre de deux sur le même rail (13) en raison de leur configuration et/ou de leur rattachement au rail (13), et étant prévu de préférence qu'au moins un et de préférence chaque chariot sert à l'agrippement de plusieurs pièces à partir de différents postes de façonnage.

8. Procédé de transport de pièces (31, 32) dans une installation de pressage à partir de respectivement un poste de façonnage (21-23) vers un autre poste de façonnage (21-23) au moyen d'au moins un rail (13), au moins deux chariots (141, 142) déplaçables par rapport au rail (13) étant disposés sur ce rail au moins au nombre de un,
**caractérisé en ce que**
des premières pièces (31) et des deuxièmes pièces (32) sont déplacées dans des directions inverses de telle sorte que les premières et deuxièmes pièces (31, 32) sont transportées dans un poste de façonnage (23) commun l'une vers l'autre en vue du raccordement de respectivement une paire d'une première et d'une deuxième pièce (31, 32).

9. Procédé selon la revendication 8,
**caractérisée en ce que**
le raccordement comprend un assemblage, de préférence par façonnage, soudage, collage, clinchage ou au moyen d'une vissage ou rivetage.

10. Procédé selon l'une des revendications 8 ou 9,
**caractérisée en ce**
**qu'**une première pièce (31) et une deuxième pièce (32) sont déplacées l'une vers l'autre dans le même cycle de travail, en particulier simultanément, étant en particulier prévu que d'abord une première pièce (31) est déplacée en direction d'une deuxième pièce (32) et puis la deuxième pièce (32) est déplacée vers la première pièce (31).

11. Procédé selon l'une des revendications 8 à 10,
**caractérisée en ce que**
des postes de façonnage (21, 22) de même type sont disposés en image miroir l'un par rapport à l'autre de telle sorte que les premières et deuxièmes pièces (31, 32) sont usinées de façon similaire.

12. Procédé selon l'une des revendications 8 à 11,
**caractérisée en ce que**
le transport s'effectue au moyen d'au moins une paire de rails (13), et **en ce que** toutes les pièces (31, 32) sont agrippées au moyen de chariots (141, 142) se correspondant l'un à l'autre de deux rails (13) et/ou de grappins (14g) sur ces chariots (141, 142) et sont déplacées au moins par un mouvement des chariots (141, 142).

13. Procédé selon la revendication 12,
**caractérisée en ce que,**
pour l'agrippement des pièces (31, 32), les rails (13) sont déplacés l'un vers l'autre et, pour le transport, les rails (13) sont soulevés, et **en ce que**, pour la pose des pièces, les rails (13) sont déplacés vers le bas et sont écartés l'un de l'autre.

14. Procédé selon la revendication 12 ou 13,
**caractérisée en ce que**
toutes les pièces (31, 32) sont déplacées également par un mouvement des rails (13).

15. Procédé selon l'une des revendications 8 à 14,
**caractérisée en ce**
**qu'**il est effectué dans une installation de façonnage selon l'une des revendications 1 à 10.
